# EUROPEAN PATENT SPECIFICATION

(11) **EP 3 224 325 B1**
(45) Date of publication and mention of the grant of the patent: **03.07.2019**
(21) Application number: 14805847.2
(22) Date of filing: 27.11.2014
(51) Int. Cl.: C09D 127/12, C08K 9/06

(54) **LUBRICANT COATING FOR MOVING PARTS OF AUTOMOBILES**
SCHMIERMITTELBESCHICHTUNG FÜR BEWEGLICHE TEILE VON AUTOMOBILEN
REVÊTEMENT LUBRIFIANT POUR DES PIÈCES MOBILES D'AUTOMOBILES

(43) Date of publication of application: 04.10.2017
(73) Proprietor: Toyota Motor Europe, 1140 Brussels (BE); Fraunhofer Gesellschaft zur Förderung der angewandten Forschung e.V., 80686 München (DE)
(72) Inventor: MORITA, Yusuke, B-1140 BRUSSELS (BE); GKAGKAS, Konstantinos, B-1140 Brussels (BE); DE WESER, Marleen, B-3012 Wilsele (BE); SCHOTTNER, Gerhard, 91560 Heilsbronn (DE); GELLERMANN, Carsten, 97218 Gerbrunn (DE); HELBIG, Uta, 90403 Nürnberg (DE)
(74) Representative: Hart-Davis, Jason
(86) International application number: PCT/EP2014/075772
(87) International publication number: WO 2016/082876

(56) References cited:
- EP-A1- 0 382 557
- EP-A1- 0 604 799
- EP-A1- 1 469 050
- JP-A- 2013 168 314
- US-A- 5 149 590
- DATABASE WPI Week 201137 Thomson Scientific, London, GB; AN 2011-F41165 XP002742910, & CN 102 010 636 A (GUANGDONG POWER GRID CORP ELECTRIC POWER) 13 April 2011 (2011-04-13)

## Description

### Field of Invention

The present invention relates to the use of a composition in order to reduce friction between moving parts of automobiles. For example, as appropriate but non-limiting examples of areas of application, compositions of the present invention can be used for piston skirt coating, crank bearing and connecting rod bearing in the automotive engine.

### Background Art

Reducing the friction losses in automotive engines is an effective way of improving fuel efficiency and reducing CO₂ emissions. In particular, the cylinder system including pistons, piston rings and cylinder liners, accounts for up to about 30% of the total amount of friction losses, and is the most challenging component with respect to friction reduction. For friction reduction in the cylinder system, low friction surface coatings and lubricants have been investigated. In recent years, hard surface coating materials such as diamondlike carbon (DLC) films have been attracting much interest owing to their excellent anti-wear and low friction properties [1]. Studies applying DLC coating to the piston rings and cylinder liners have reported low friction [2]. On the other hand, difficulties in applying DLC coatings on piston skirts due to scuffing and peeling problems have been reported [3,4]. Also the application of a DLC coating to pistons is generally expensive. Therefore, polymer films such as polyamide-imide (PAI) have been used as piston skirt coatings for friction reduction and anti-scuffing. In order to achieve higher friction reduction in piston skirts at a reasonable cost, further modifications of the polymer are required.

Perfluoropolymer films are reported to reduce friction [5], but they have the disadvantage of poor abrasion resistance and lack of durability. Chemical nanotribology enables the bottom-up synthesis of nanoparticles, which can improve the mechanical performance of polymer and enable the formation of hard coatings via sol-gel processing [6]. Composites exhibiting low friction can also be obtained via this approach. In addition, in the field of tribology, some nanoparticles were reported as oil additives which improve not only the anti-wear ability but also the friction property. Song et al. [7] reported that using SiO₂ nanoparticles as oil additives can improve the friction property and anti-wear properties by the rolling effect of the nanoparticles.

### Non-Patent Literature References

[1] M. Kano, Y. Yasuda, Y. Okamoto, Y. Mabuchi, T. Hamada, T. Ueno, J. Ye, S. Konishi, S. Takeshima, J.M. Martin, M.I.D.B. Bouchet and T.L. Mogne: Tribol. Lett., Vol. 18 (2005), p. 245.
[2] E. Rejowski, S.P. Mordente, M. Pillis and T. Casserly: SAE Technical Paper, 2012-01-1329 (2012).
[3] N.G. Demas, R.A. Erck, O.O. Ajayi and G.R. Fenske: Lubrication Science, Vol. 22 (2012), p. 73.
[4] Y. Wang and S.C. Tung: Wear, Vol. 225 (1999), p. 1100.
[5] H. Unal, U. Sen and A. Mimaroglu: Materials and Design, Vol. 27 (2006), p. 694.
[6] F. Bauer, H. Gläsel, U. Decker, H. Ernst, A. Freyer, E. Hartmann, V. Sauerland and R. Mehnertet: Progress in organic coatings, Vol. 47 (2003), p. 147.
[7] X.Y. Song, S.H. Zheng and Q. Chen: Applied Mechanics and Materials, Vol. 316 (2013), p. 950.

Furthermore, EP 372 559 discloses lubricant compositions wherein polytetrafluoroethylene (PTFE) may be present as a solid lubricant (in addition to one more other resins such as an epoxy and amino resins) in addition to silicon dioxide as a friction coefficient adjuster. KR 2011 0032538 describes lubricant compositions in which silicon oxide or nitride may be dispersed in PTFE.

Prior art compositions have normally required the use of additives and it has proven difficult to keep a low friction condition even after the surface of the film is worn away. As mentioned in reference [7] (Song et al.), SiO₂ nanoparticles as additives in oil was already reported. However, there is a significant problem that these materials had to be added as additives for the oil. Car users can choose their engine oil, and so this method is not effective to achieve low friction continuously. Furthermore, this kind of additive easily disappears because of oil consumption, and so the effect of low friction does not continue for a long time.

Previous patent applications EP 372 559 and KR 2011 0032538 focused on coatings which contain PTFE and SiO₂. However, here it is not possible to achieve a low friction property of SiO₂ particles in the coating as a bearing, due to interaction between the SiO₂ and PTFE polymer.

Finally, EP 1 469 050 discloses a coating composition for piston skirt that comprises a binder resin, preferably PAI, a solid lubricant, titanium dioxide powder and a silane coupling agent.

### Summary of the Invention

In contrast to the approach of non-patent literature reference [7] cited above, the present inventors had the idea of avoiding the problem of using nanoparticles as additives to oil by instead applying SiO₂ nanoparticles within a film. Even if part of the film is worn away, the low friction effect can be maintained. Unlike the compositions of EP 372 559 and KR 2011 0032538, in an important new feature of the present invention, a fluorocarbon or fluorocarbon polymer is added to the SiO₂ (or other metal oxide) nanoparticle surface. This is considered to achieve repulsive force between the polymer and the nanoparticle, thus enabling low friction property within the film.

With a view to solving one or more of the problems arising with existing friction-reducing compositions, the present invention thus provides the use of a composition comprising:
(A) a fluorocarbon polymer ; and
(B) particles of silicon dioxide or a metal oxide bearing fluorocarbon groups on their surface in order to reduce friction between moving parts of automobiles.

In advantageous embodiments of the invention, the core (nano)particles (B) are silica (silicon dioxide). However, it is also envisaged that core metal oxide particles may be used other than silica (silicon dioxide), for example TiO₂, Al₂O₃ or Fe₃O₄.

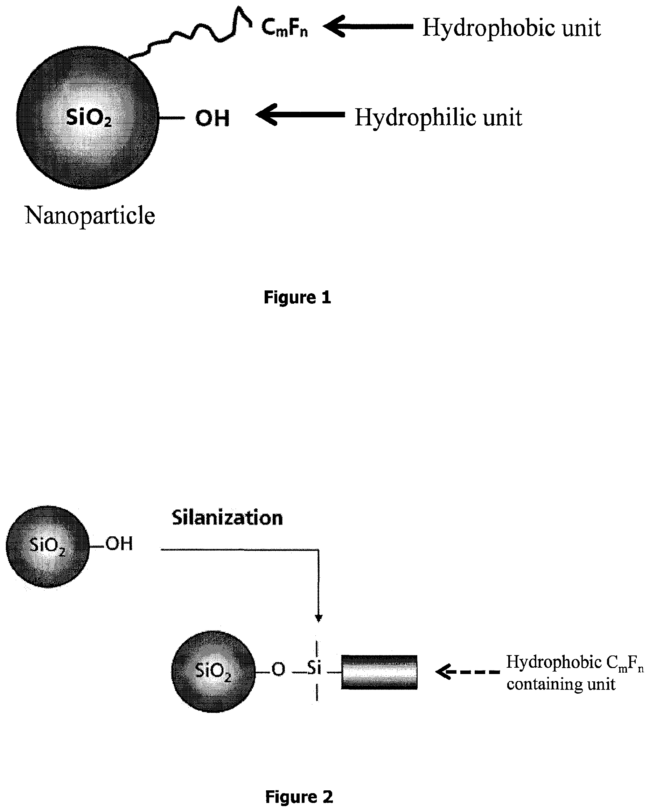

In a preferred embodiment of the invention, particles of silicon dioxide bearing fluorocarbon groups on their surface (B) are obtained by a silanization process wherein silanol OH groups on the surface of a starting material silica (nano)particle, or other metal oxide (nano)particle, are derivatized using a hydrophobic silane containing a hydrophobic CₙF₂ₙ₊₁ group linked to a silicon atom able to form a covalent bond with the surface OH groups. This process is illustrated schematically in Figure 2.

More generally, the invention is based on the discovery that low friction mechanisms may be improved by coating the particles of silicon dioxide or metal oxide used in solid lubricant compositions. In this manner a coated surface is provided that shows mechanical force absorption, more specifically friction force absorption, wherein the coated surface comprises:
(C) a base material; and
(D) particles of silicon dioxide or a metal oxide which have units on their surface providing a repulsive interaction in contact with the base material (C).

### Brief Description of the Figures

Figure 1 is a schematic representation of a particle exhibiting hydrophobic and hydrophilic groups on its surface.
Figure 2 is a schematic representation of nanoparticle surface modification by reaction with hydrophobic silanes.
Figure 3 is a schematic representation of a coating surface showing fluorocarbon-bearing SiO₂ particles dispersed in a continuous phase of fluorocarbon polymer.
Figure 4 is a schematic representation of the phenomena believed to be occurring on a microscopic scale during the use of the material of the invention, according to which frictional force is dispersed by rotation of SiO₂ nanoparticles owing to the repulsive force between fluorocarbon polymer and fluorocarbon on the SiO₂ nanoparticle.
Figure 5 shows the results of a study of influence of particle modification on friction coefficient.

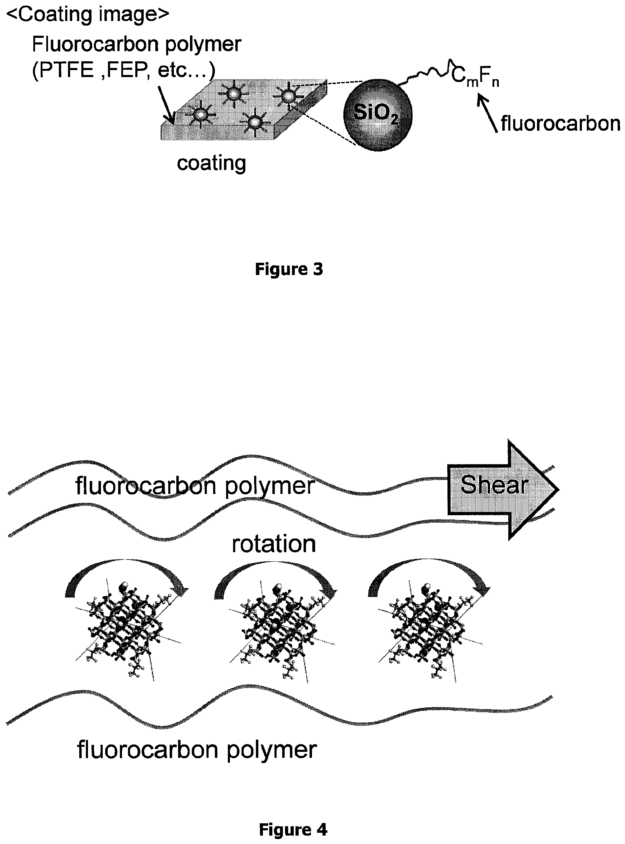

The annotation "CₘFₙ" for the hydrophobic unit (fluorocarbon group) in Figures 1 to 3 should not be interpreted as excluding mixed chains containing both fluorinated carbons, such as -CF₂- and -CF₃ groups, and hydrocarbon chain components such as methylene groups -CH₂-.

### Detailed Description of the Invention

In an aspect of the present invention, small particles such as nanoparticles with a degree of hydrophobic surface modification are used as fillers for a perfluoropolymer. Figure 1 shows the concept of functionalization of SiO₂ nanoparticles. SiO₂ nanoparticles combine hydrophilic and hydrophobic surface units to achieve low friction property. The hydrophobic modification of particles can be carried out by a conventional silanization process. Silanol functions being present on the surface of silica particles can be reacted with hydrophobic fluoroalkyl silanes in order to generate hydrophobic particles (Figure 2).

Concerning the synthesis of silica particles to be used in the present invention (prior to surface modification with hydrophobic groups), silica particles may appropriately be synthesized by methods known to the person skilled in the art. In an appropriate but non-limiting example, this may be done according to the method of Stoeber via sol-gel technology. Monodisperse spherical particles result from tetraethoxysilane via hydrolysis and condensation under basic conditions in the presence of ammonia in ethanol. The general chemical reaction is given in the following scheme (1):

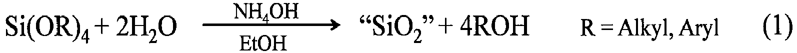

The Stöber method enables monodisperse silica spheres from less than 0.05 µm to 2 µm to be prepared. The method is based on the hydrolysis and polycondensation of alkyl silicates in basic (ammonia) alcoholic solutions. The particle size is affected by the water and ammonia concentration and also by the nature of the alcohol used as a solvent. When using alcohols of higher molecular weight, the reaction is slowed down and both median particle size and the spread of the size distribution increase. This method is described by Stöber et al. in Journal of Colloid and Interface Science, Volume 26, Issue 1, January 1968, pages 62-69.

In an alternative embodiment of the present invention, instead of silica (nano)particles at the core of component (B) particles in the present invention, the (B) particles bearing fluorocarbon groups on their surface may have (non-silicon) metal oxide cores. As exemplary non-limiting embodiments, the metal oxide may be TiO₂, Al₂O₃ or Fe₃O₄. Al Dahoudi et al., Electrochimica Acta, 59 (2012), 32-38 describe the modification of a TiO₂ nanoparticle surface by a silanization reaction with MPTS (methacryloxypropyltrimethoxysilane). It is considered that analogous derivatization with a fluorinated silane would provide TiO₂-fluorosilanized nanoparticles that could be used as component (B) in the present invention. Similarly, Lara-Estevez et al., Open Journal of Polymer Chemistry, 2012, 2, 63-69, describe the modification of an Al₂O₃ nanoparticle surface by a silanization reaction, and Yamaura et al., Journal of Magnetism and Magnetic Materials, 279 (2004), 210-217, and Kim et al., J. Ind. Eng. Chem., Vol. 13, N°7 (2007), 1137-1141, describe the modification of Fe₃O₄ nanoparticle surfaces by silanization reactions. By analogous derivatization with fluorinated silanes, Al₂O₃- or Fe₃O₄-fluorosilanized nanoparticles could be prepared and used as component (B) in the present invention.

In the present invention, an appropriate average particle size for the silicon dioxide or metal oxide is in the range of 10 nm to 100,000 nm. This particle size range applies to the core particle before, and not counting, surface derivatization with fluorocarbon-containing groups. Preferred maximum average particle sizes are 1000 nm, more preferred is 500 nm, still more preferred is 100 nm, or at most 80 nm. Appropriate minimum particle size is at least 10 nm, at least 15 nm, at least 20 nm, at least 30 nm, or at least 40 nm.

An appropriate method for measuring average particle size is dynamic light scattering (DLS). An average particle size in a size (d/nm, x-axis) vs. volume (%, y-axis) plot can be calculated by summing volume (%) x size (nm).

As illustrated schematically in Figure 2, in the silanization process, silica (nano)particles are subjected to hydrophobic modification. Silanol functions present on the surface of the particles are reacted with hydrophobic fluoroalkyl silanes in order to generate hydrophobic particles. It is possible to only block a part of the surface silanol functions with hydrophobic silanes, giving resulting particles having both polar as well as non-polar regions.

As described in Kim et al., J. Ind. Eng. Chem., Vol. 13, N°7 (2007), 1137-1141, the silanization reaction may occur in two steps. Firstly, a hydrolysis reaction may take place in which alkoxide groups of a silanizing reagent are replaced by hydroxyl groups (-OH) to form reactive silanol groups, which condense with other silanol groups to produce a siloxane bond (Si-O-Si). In a second step, the -OH groups on the surface of the silica form a Si-O-Si covalent bond with silanol through a dehydration reaction. In Brassard et al., Applied Sciences, 2012, 2, 453-464, a silanization process to derivatize a SiO₂ nanoparticle is described, specifically using the fluoroalkylsilane C₁₆H₁₉F₁₇O₃Si known as "FAS17".

In the present invention, preferred silanization reagents contain fluoroalkyl chains of formula CₓF₂ₓ₊₁. The silanization reagents may contain mixed hydrocarbon-fluorocarbon chains of formula -(CH₂)_{y}(CF₂)ₓF. For example, an appropriate molecular formula of a derivatizing silanization reagent may be generally expressed as (RO)₃Si(CH₂)_{y}(CF₂)ₓF, where R is an alkyl group, most preferably methyl or ethyl, y is an integer from 1 to 20 preferably 1 to 10, more preferably 1 to 6 or 1 to 5, and x is an integer from 1 to 20 preferably 1 to 10, more preferably 1 to 6. By this means, surface (silicon oxide or metal oxide)-O-Si(CH₂)_{y}(CF₂)ₓF groups are prepared. In preferred embodiments, a derivatizing silanization reagent of formula (RO)₃Si(CH₂)₂(CF₂)ₓF may be used (y = 2), for example with x = 1. A corresponding reagent is 3,3,3-trifluoropropyl-trimethoxysilane. Among further fluorinated silanes suitable for use in the present invention, reference may be made, for example, to DE 10 2012 201 068 B3 and DE 41 18 184 A1. In the present invention, it is preferable that the outermost groups, with respect to the core particle (silica or metal oxide) which is derivatized, be perfluorinated, because these have an important influence on the interaction of the core-/shell-nanoparticle with the polymer matrix.

In the present invention, the quantity of fluorocarbon groups, such as fluoroalkyl groups, on the silica particles, or metal oxide particles, is at most 5000 µmol / g. This value of µmol / g is calculated by dividing the number of (micro)moles of silanization reagent by the dry weight of silica particles, or metal oxide particles, before the derivatization. In a generally appropriate range, the quantity of fluorocarbon groups may lie between 50 and 2000 µmol / g, or between 100 and 1000 µmol / g, or between 200 and 700 µmol / g. In preferred embodiments, the quantity of fluorocarbon groups is at least 300 µmol / g, or at least 350 µmol / g, or at least 400 µmol / g, or at least 450 µmol / g, or at least 500 µmol / g. In preferred embodiments, the quantity of fluorocarbon groups is at most 700 µmol / g, or at most 650 µmol / g, or at most 600 µmol / g, or at most 550 µmol / g. These preferences are generally applicable in the practice of the invention, irrespective of the exact material choice for component (B) and irrespective of the specific options chosen for other components of the composition, for example the choices of material and amount for each of them.

Concerning the fluorocarbon groups on the surface of the silica particles (or metal oxide particles) after the silanization step, these could be prepared with long (polymeric) fluoroalkyl chains in order to have as many as 1000 -CF₂- groups, or even more. However, it is believed, based on present experimental results, that with such long chains, friction cannot very effectively be reduced. It appears that shorter fluorocarbon chains are more able to reduce friction. It should be noted that the optimum fluoroalkyl chain length may well depend on the diameter of SiO₂ nanoparticle (or other metal oxide nanoparticle), so that a single general optimum length cannot be given.

Generally, the fluorocarbon groups on the surface of the silica particles (B) are fluoroalkyl chains of formula CₙF₂ₙ₊₁. In generally advantageous embodiments, n in the formula CₙF₂ₙ₊₁ is at most 6. In one advantageous embodiment, the fluorocarbon groups are C₃F₇ groups. These choices are generally applicable in the practice of the invention, irrespective of the exact material choice for component (B) and irrespective of the specific options chosen for other components of the composition, for example the choices of material and amount for each of them.

Concerning component (A), the fluorocarbon polymer (A), in generally appropriate embodiments, may be one or more selected from the group consisting of: polytetrafluoroethylene (PTFE), fluorinated ethylene propylene (FEP), polyvinylfluoride (PVF) and perfluoroalkoxy polymer (PFA). Illustrative but non-limiting examples of commercially available fluorocarbon polymers in these categories include: as a fluorinated ethylene propylene (FEP): Du Pont Polymer FEP TE9568, as a perfluoroalkoxy polymer (PFA): Du Pont TE7224, as a polytetrafluoroethylene (PTFE): Du Pont PTFE 7A X, as a polyvinylfluoride (PVF): Du Pont Tedlar. Most commonly, the molecular weight range of the polymer (A) will be between 10,000 and 10,000,000 g/mol, although there is no particular limitation on the molecular weight range of fluoropolymers to be used in the present invention.

In the present invention, in generally advantageous embodiments, the weight percentage, as dry weight, of (B) particles of silicon dioxide, or metal oxide, bearing fluorocarbon groups on their surface, with respect to the sum of the weight of (B) and (A), the fluorocarbon polymer, satisfies the relationship 0.01 < B/(A+B) < 0.75. This preference is generally applicable in the practice of the invention, irrespective of the exact material choice for components (A) and (B).

It is possible for compositions suitable to be used in the present invention to contain further organic or inorganic materials beyond the claimed components (A) and (B). For example, useful compositions may contain, as further additives, other materials known in the art to provide low friction to solid lubricant compositions. Examples of such further low friction materials are in particular graphite, carbon fibre, diamond particle and molybdenum disulphide (MoS₂). It is also possible for compositions suitable to be used in the invention to contain a binder resin which may provide an anti-peeling property. Such binder resins may include thermoplastic or thermosetting resins. Preferred resins include thermosetting resins such as polyamide-imide (PAI), polyimide or epoxy resins, and most preferred is polyamide-imide (PAI). However, in advantageous embodiments, there are no further additives such that the composition in the dry state would consist of claimed components (A) and (B), and dispersions of the dry components (A) and (B) in a solvent or solvent mixture would not contain any further low friction materials or organic resins.

These compositions are used to reduce the friction between moving parts, for example metallic moving parts, of automobiles. Illustrative non-limiting examples of areas of application include use for piston skirt coating, crank bearing and connecting rod bearing in the automotive engine.

In terms of the method by which the compositions may be applied to the surfaces, for example metal surfaces, for such applications, it is possible to apply a dispersion of the composition in oil, water or grease, in a spraying, dipping or brushing method. Application of free (dry) powder may also be envisaged. Generally, dispersions of (nano)particle composite compositions may be appropriately applied by conventional coating techniques such as dip-, spray-, spin-, curtain- and flow-coating procedures. Degreasing or acid washing procedures known to the person skilled in the art may be used to prepare metal surfaces before application of the compositions.

More generally, surfaces to be treated in the present invention can include base materials of polymer, carbon material, ceramics, metal, rubber or plastic or composite materials based on combinations of one or more of the aforementioned materials.

In the surfaces coated in accordance with the invention, the base material (C) may advantageously comprise or consist of a polymer or carbon material or ceramics or metal or rubber or plastic or composites thereof. The fluorocarbon groups on the surface of the particles (D) of silicon dioxide or a metal oxide provide a repulsive interaction that may be caused by coulomb interaction or anti-bonding molecular interaction between the base material (C) and units on the surface of particles (D).

The particles (D) are particles (B) as defined herein, i.e. (nano)particles of silicon oxide or metal oxide bearing fluorocarbon groups on their surface, as defined herein, wherein the fluorocarbon groups may provide a repulsive effect. These (nano)particles of silicon oxide or metal oxide may be distributed in an external phase consisting of a fluorocarbon polymer (A) as defined herein.

### Examples

In the study reported below, nanoparticles having a diameter of approximately 60 nm (diameter before derivatization by silanization) were prepared. The sample dispersions (i.e. particles in solvent ethanol) were analysed by dynamic light scattering (DLS) / photon correlation spectroscopy (PCS). The samples showed narrow size distributions (Table 1).

**Table 1. Particle size measurement of SiO₂ particles by DLS, dispersed in water.**

| Quantity of F3 silane | Mean diameter / nm | Polydispersity |
|---|---|---|
| - | 59 | 0.037 |
| 250 µmol / g | 71 | 0.064 |
| 500 µmol / g | 72 | 0.088 |

It will be observed that the addition of surface silyl groups here increased the average particle diameter by approximately 10 nm.

### 1. Synthesis of Silica Nanoparticles exhibiting 60 nm diameter (according to Stoeber method)

1,400 g ethanol were filled into a 2 L reaction vessel. 90 ml of aqueous ammonia solution (25% by wt.) were added followed by stirring for 1.5 min at 1,200 rpm. 90 g tetraethoxysilane were poured into the basic solution and stirring for 1.5 min at 1,200 rpm was followed by storing the mixture for 24 hrs. After 1 hr a slight turbidity of the mixture occurs. After 24 hrs the turbidity becomes fairly strong indicating the formation of (nano-)particles (colloidal solution: sol). The particle size was controlled by dynamic light scattering (DLS).

As regards surface modification of particles, in order to investigate the influence of surface modification on the friction property, variations in the amount of fluorine-containing silane F3 were introduced as shown in Table 1. Apart from the unmodified silica particles, two different quantities of silane were used: 250 and 500 µmol/g. Qualitative and semi-quantitative study of surface modification was carried out by FTIR spectroscopy.

### 2. Silylation of Silica Nanoparticles (250 µmol/g)

The dispersion of silica nanoparticles resulting from the reaction 1 (section above) was reduced to 1/3 of its volume by rotary evaporation at 40 °C and 120 mbar. Dry ethanol was added to achieve the original volume and the evaporation procedure was repeated until the water content of the mixture was determined to be below 0.3 % (Karl Fischer titration). The solids content of the resulting dispersion was then determined by drying 0.5 g of the dispersion at 200 °C for 1 hr.

A concentration around 5-6 % by wt. of silica nanoparticles was chosen for the silylation process. 121.8 g of sol (containing 7.4 g of nanoparticles) is stirred and 37.4 µl of triethanolamine (TEA) are added (0.5 % by wt. of the solids content). Afterwards, 0.407 g of 3,3,3-trifluoropropyl-trimethoxysilane ("F3-silane", 250 µmol/g of nanoparticles) dissolved in 5 g of toluene are added and the mixture was stirred and refluxed at 80 °C for 24 hrs. The dispersion is opaque and whitish in the beginning and turns bluish after 3 hrs indicating the accomplishment of the surface modification. No further colorimetric changes occur afterwards.

After 24 hrs the dispersion was cooled to room temperature and centrifuged at 7,500 rpm for 5 hrs and 30 min. The supernatant was removed and the solid redispersed in ethanol. The procedure was repeated twice and ultimately the solid was redispersed in water. The solids content was determined by drying 0.5 g of the dispersion at 200°C for 1 hr.

It is important to prepare a homogeneous filler-containing polymer system in order to obtain coatings with high surface quality. Therefore, an important step is the combination of filler particles with the polymer system, in this case the perfluorinated polymer, here FEP. The FEP used here was obtained from commercial supplier DuPont (Du Pont Polymer: FEP TE9568). Both material systems showed a homogeneous mixing behavior, i.e. no gelation, agglomeration or aggregation was observed. Therefore, the modified silica particles were directly combined with the FEP sol. As a generally applicable protocol, modified silica particles in water (10 to 15 wt.%) were added to the aqueous FEP sol (55 wt.% solids content) and stirred for 15 min. No additives were necessary. This procedure was used for all of the different silane contents.

### 3. Synthesis of coating solution with FEP TE 9568 (DuPont)

In a specific protocol that was used as a means of carrying out synthesis of a coating solution as part of the present invention, 30 g of aqueous FEP-Sol (solids content: 55.6 %) containing 16.68 g of particles was added to 161.94 g of F3 modified silica sol (solids content: 5.15 %) to achieve a concentration of 50% by wt. of FEP (8.34 g of silica nanoparticles). The mixture was sonicated for 15 min.

In generally applicable embodiments, polymer dispersions with and without modified particles may be treated with ultrasonics for 15 min. Afterwards the resulting dispersions may be applied by a spiral blade with a gap size of 20 µm. Al sheets (10 x 10 cm²) were used as substrates. After drying for 2 min at 115°C, curing of the FEP matrix at 270 °C for 20 min may be carried out. Finally, the samples are taken out of the oven and directly put in a salt/ice mixture for quenching.

### 4. Coating of aluminium sheets

In a specific protocol that was used as a means of carrying out coating of aluminium sheets to test the present invention, the substrates to be coated were degreased and cleaned by ethyl acetic acetate (EAA), cotton swab, rinsed with water and dried at 50 °C for 5 min. The warm substrate was flow coated with the coating solution/dispersion and dried at 115 °C for 2 min. Afterwards, it was cured at 280 °C for 20 min.

To elucidate the relationship between friction coefficient and SiO₂ functionalization of hydrophobic fluoroalkyl units, friction tests were performed by UST (Universal Surface Tester friction test) which is a microtribological unit for combined measurement of roughness, deformation and friction. Measurements were performed for the prepared coatings over a defined length of 10 mm with a velocity of 0.1 mm/s. The steel sphere with a diameter of 1.8 mm had a loading of 20 mN. The measurements were carried out at room temperature (i.e. 22 +/- 1°C). The particle content in the FEP based coating was 50 wt.%. Coating thickness is shown in Table 2. All coating samples were below 15 µm) thickness.

**Table 2: UST measurements for different coatings prepared**

| Particle modification | Friction coefficient | Standard Deviation | Roughness (µm) | Film thickness (µm) |
|---|---|---|---|---|
| - | 0.43 ± 0.01 | 0.241 | 0.13 | 7.2 |
| 250 µmol / g | 0.33 ± 0.03 | 0.205 | 0.18 | 4.5 |
| 500 µmol / g | 0.06 ± 0.02 | 0.170 | 0.15 | 14.5 |

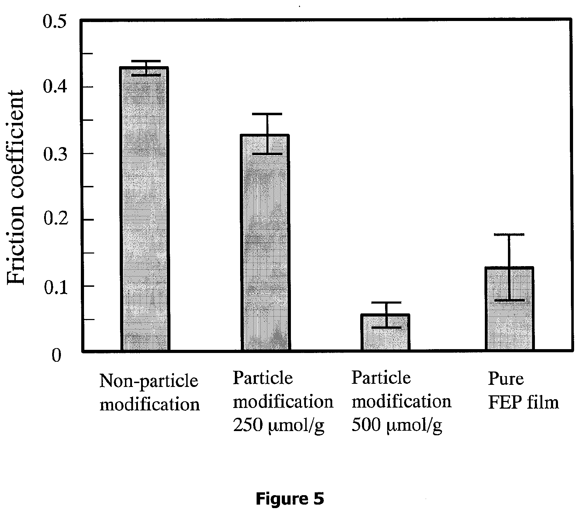

The influence of the surface modification on the friction coefficient is illustrated in Figure 5. These results are based on investigations with varying amounts of F3 silanes, which were used for the modification process of silica particles. In conclusion, the surface modification has a significant influence on friction. The lowest friction coefficient 0.06 was achieved with a silane content of 500 µmol/g compared to that of pure FEP film which was 0.13. Table 2 summarizes the UST measurement results for each coating. The mean value and standard deviation were derived from four measurements per coating. Surface roughness was almost the same for each measurement.

Theoretical studies were also carried out in order to further elucidate the interaction between the functionalized silica nanoparticles and the fluoropolymer matrix.

First of all, a molecular dynamics simulation was performed using a shear model between a Fe Substrate and a film of lubricant composition.

In the computational method, a molecular dynamics (MD) approach was applied to clarify the friction reduction mechanisms of FEP film with functionalized SiO₂ nanoparticles. MD simulations were performed using the NEW-RYUDO software, as described in Y. Morita, T. Shibata, T. Onodera, R. Sahnoun, M. Koyama, H. Tsuboi, N. Hatakeyama, A. Endou, H. Takaba, M. Kubo, C.A.D. Carpio and A. Miyamoto: Jpn. J. Appl. Phys., Vol. 47 (2008), p. 3032, and Y. Morita, S. Jinno, M. Murakami, N. Hatakeyama and A. Miyamoto: International Journal of Engine Research, Vol. 15 (2014), p. 399. The Verlet algorithm was used to solve the equations of motion. In the model of MD simulation, a Fe substrate to which a pressure of 0.1 GPa is applied is moved with a velocity of 100 m/s. Under this Fe substrate is a FEP film simulated with C₁₀F₂₂ molecules, at the bottom of the polymer region being a fixed part - the further a position is removed from the moving Fe substrate, the less it moves during the simulation. The size of the model was 60 × 60 × 100 Å³, and periodic boundary conditions were imposed in the *x*- and *y*-directions. 400 C₁₀F₂₂ molecules were randomly placed surrounding a SiO₂ nanoparticle to simulate the FEP film with a SiO₂ nanoparticle. The diameter of the SiO₂ nanoparticle in this simulation was 2 nm, which was smaller than the experimental diameter of 60 nm due to computational cost. However, MD reports which successfully predict the physical properties of nanoparticles while using small diameter model have been reported (cf. A. Rajabpour, F.Y. Akizi, M.M. Heyhat and K. Gordiz: International Nano Letters, Vol. 3 (2013), p. 58). To clarify the interaction between surface functionalization and surrounding fluoropolymer, 4 hydrophilic OH units and 4 hydrophobic F3 units were added to the SiO₂ nanoparticle. It is to be noted that in this molecular dynamics (MD) study, and in following quantum chemical (QD) study, the "F3" unit tested was a fully fluorinated heptafluoropropyl (-CF₂-CF₂-CF₃) group, whereas the "F3" silane used in the above chemical synthesis and friction test was based on an end-fluorinated 3,3,3-trifluoropropyl (-CH₂-CH₂-CF₃) group. In the MD test, the sliding simulation was performed for 50ps by applying a pressure of 0.1 GPa to the upper Fe substrate and moving it along the x-axis, with the bottom quarter of FEP film being fixed. The time step and the shear velocity were 0.1 fs and 100 m/s, respectively. This sliding speed is higher than that of experimental tests, but allows the simulation to be performed at a reasonable computational cost. However, previous MD studies have confirmed matching sliding behavior even at high sliding speed (cf. papers by Morita et al. cited above). Simulation was carried out under constant volume and temperature conditions. Temperature was controlled at 300K by scaling velocities of atoms in the model.

Due to the van-der-Waals force between Fe and C₁₀F₂₂ molecules, C₁₀F₂₂ molecules near the Fe substrate moved along with the Fe substrate. Sliding occurred between C₁₀F₂₂ molecules owing to their small intermolecular van-der-Waals forces. Therefore, the moving distance of the C₁₀F₂₂ molecules gradually decreases as the distance from the Fe substrate increases. SiO₂ nanoparticles moved with surrounding C₁₀F₂₂ molecules with small rolling movement in the *x-*direction. There are no clear differences between the moving distance of the nanoparticle and C₁₀F₂₂ atoms. The SiO₂ nanoparticle did not move independently but followed the motion of the surrounding C₁₀F₂₂ molecules due to the intermolecular forces between the nanoparticles and C₁₀F₂₂.

To clarify the precise interaction between surface functionalization and polymer, quantum chemical (QC) calculation was performed using the "COLORS" program which is based on the Tight-Binding (TB) approximation (see A. Miyamoto, R. Miura, A. Suzuki, N. Hatakeyama, Y. Oono, K. Kobayashi, S. Kozawa, M. Hori and M.C. Williams: Proceeding of FISITA, F2014-EPT-016 (2014), and S. Loehle, C. Matta, C. Minfray, T.Le Mogne, J.M. Martin, R. Iovine, Y. Obara, R. Miura and A. Miyamoto, Tribol. Lett., Vol. 53 (2014), p. 319.

It was concluded from this QC study that fluoroalkyl units on the SiO₂ surface play an important role in creating a repulsive interaction between nanoparticles and fluoropolymer which can facilitate the motion of the SiO₂ nanoparticles inside the fluoropolymer when shear force is applied to the film.

In a further molecular dynamics simulation of a shear model, in order to clarify the effect of F3 units on its friction property, 4 models were made which had 0, 5, 10 and 15 F3 units on the SiO₂ surface respectively. The sliding simulations were performed for 250ps by applying a pressure of 0.1 GPa to the upper C₁₀F₂₂ molecules and a horizontal motion along with *x*-axis with a velocity of 100 m/s. The bottom layer of C₁₀F₂₂ molecules was fixed.

Concerning the *x*-direction displacement of SiO₂ nanoparticles, the displacement of the SiO₂ nanoparticles with 15 F3 units was shorter than that of 0 F3 units, which indicates that sliding between fluoropolymer and SiO₂ nanoparticles is promoted by adding hydrophobic F3 units on the SiO₂ nanoparticle surface.

It was concluded from this further MD study that the F3 functionalization of SiO₂ nanoparticles can lead to low friction owing to not only sliding between nanoparticle and fluoropolymer but also to the rolling motion of the nanoparticle that arises from the repulsive interaction between F3 units and the fluoropolymer as was revealed from QC calculation.

The overall conclusions from this experimental study were that:
1. UST friction test results showed that the friction coefficient dramatically decreased while increasing the percentage of SiO₂ surface functionalization by fluoroalkyl F3 units (here -CH₂-CH₂-CF₃ units).
2. QC calculation results indicate that by adding F3 units (here -CF₂-CF₂-CF₃ units) on the SiO₂ nanoparticle surface, the attractive force between fluoropolymer and nanoparticle changes to repulsive.
3. MD simulation results indicate that the F3 functionalization (here -CF₂-CF₂-CF₃ units) of SiO₂ nanoparticles can lead to low friction owing not only to sliding between nanoparticle and fluoropolymer but also to the smooth rolling motion of the nanoparticles that arises from the repulsive interaction between F3 units and the fluoropolymer as was revealed from QC calculation.

## Claims

1. Use of a composition comprising:
(A) a fluorocarbon polymer; and
(B) particles of silicon dioxide or a metal oxide bearing fluorocarbon groups on their surface in order to reduce friction between moving parts of automobiles.

2. Use according to claim 1 for a piston skirt coating, a crank bearing or a connecting rod bearing in an automotive engine.

3. Use according to claim 1 or 2, wherein the fluorocarbon polymer (A) is one or more selected from the group consisting of: polytetrafluoroethylene (PTFE), fluorinated ethylene propylene (FEP), polyvinylfluoride (PVF) and perfluoroalkoxy polymer (PFA).

4. Use according to any of claims 1 to 3, wherein the fluorocarbon groups on the surface of the silica or metal oxide particles (B) contain fluoroalkyl chains of formula CₓF₂ₓ₊₁.

5. Use according to claim 4, wherein x in the formula CₓF₂ₓ₊₁ is at most 6.

6. Use according to claim 4 or 5, wherein the fluorocarbon groups are C₃F₇ groups.

7. Use according to any of claims 1 to 6, wherein the fluorocarbon groups on the surface of the silica or metal oxide particles (B) contain mixed hydrocarbon-fluorocarbon chains of formula -(CH₂)_{y}(CF₂)ₓF.

8. Use according to claim 7, wherein x = 1.

9. Use according to claim 7 or 8, wherein y is a whole number from 1 to 5.

10. Use according to any of claims 7 to 9, wherein the surface of the silica or metal oxide particles (B) bear Si-(CH₂)₂-CF₃ groups.

11. Use according to any of claims 1 to 10, wherein the particles of silicon dioxide or metal oxide bearing fluorocarbon groups on their surface (B) are obtained by a silanization process wherein silanol OH groups on the surface of a starting material silica or metal oxide (nano)particle are derivatized using a hydrophobic silane containing a hydrophobic CₓF₂ₓ₊₁ group linked to a silicon atom able to form a covalent bond with the surface OH groups.

12. Use according to any of claims 1 to 11, wherein the silicon dioxide or metal oxide has an average particle size in the range of 10 nm to 100,000 nm, preferably at least 10 nm and at most 1000 nm, more preferably at least 10 nm and at most 100 nm, wherein the average particle size is measured by dynamic light scattering (DLS).

13. Use according to any of claims 1 to 12, wherein the (B) particles bearing fluorocarbon groups on their surface are metal oxide particles.

14. Use according to claim 13, wherein the metal oxide is TiO₂, Al₂O₃ or Fe₃O₄.

15. Use according to any of claims 1 to 14, wherein the quantity of fluorocarbon groups, such as fluoroalkyl groups, on the silica particles, or metal oxide particles, is at most 5000 µmol / g, wherein the quantity of fluorocarbon groups is calculated by dividing the number of (micro)moles of silanization reagent by the dry weight of silica particles or metal oxide particles, before the derivatization.

16. Use according to any of claims 1 to 15, wherein the weight percentage, as dry weight, of (B) particles of silicon dioxide, or metal oxide, bearing fluorocarbon groups on their surface, with respect to the sum of the weight of (B) and (A), the fluorocarbon polymer, satisfies the relationship 0.01 < B/(A+B) < 0.75.

## Patentansprüche

1. Verwendung einer Zusammensetzung, umfassend:
(A) ein Fluorkohlenstoffpolymer, und
(B) Partikel aus Siliziumdioxid oder einem Metalloxid, die Fluorkohlenstoffgruppen auf ihrer Oberfläche tragen, um eine Reibung zwischen sich bewegenden Teilen von Kraftfahrzeugen zu verringern.

2. Verwendung nach Anspruch 1 für eine Kolbenschaftbeschichtung, ein Kurbellager oder ein Pleuellager in einem Kraftfahrzeugmotor.

3. Verwendung nach Anspruch 1 oder 2, wobei das Fluorkohlenstoffpolymer (A) eines oder mehrere ausgewählt aus der Gruppe bestehend aus Polytetrafluorethylen (PTFE), fluoriertem Ethylenpropylen (FEP), Polyvinylfluorid (PVF) und Perfluoralkoxypolymer (PFA) ist.

4. Verwendung nach einem der Ansprüche 1 bis 3, wobei die Fluorkohlenstoffgruppen auf der Oberfläche der Siliziumdioxid- oder Metalloxidpartikel (B) Fluoralkylketten der Formel CₓF₂ₓ₊₁ enthalten.

5. Verwendung nach Anspruch 4, wobei x in der Formel CₓF₂ₓ₊₁ höchstens 6 ist.

6. Verwendung nach Anspruch 4 oder 5, wobei die Fluorkohlenstoffgruppen C₃F₇-Gruppen sind.

7. Verwendung nach einem der Ansprüche 1 bis 6, wobei die Fluorkohlenstoffgruppen auf der Oberfläche der Siliziumdioxid- oder Metalloxidpartikei (B) gemischte Kohlenwasserstoff-Fluorkohlenstoffketten der Formel - (CH₂)_{y}(CF₂)ₓF enthalten.

8. Verwendung nach Anspruch 7, wobei x = 1.

9. Verwendung nach Anspruch 7 oder 8, wobei y eine ganze Zahl von 1 bis 5 ist.

10. Verwendung nach einem der Ansprüche 7 bis 9, wobei die Oberfläche der Siliziumdioxid- oder Metalloxidpartikel (B) Si-(CH₂)₂-CF₃-Gruppen trägt.

11. Verwendung nach einem der Ansprüche 1 bis 10, wobei die Partikel aus Siliziumdioxid oder Metalloxid, die Fluorkohlenstoffgruppen auf ihrer Oberfläche (B) tragen, durch ein Silanisierungsverfahren erhalten werden, wobei Silanol-OH-Gruppen auf der Oberfläche eines Ausgangsmaterials aus Siliziumdioxid oder Metalloxid-(Nano-)Partikeln unter Verwendung eines hydrophoben Silans derivatisiert werden, das eine hydrophobe CₓF₂ₓ₊₁-Gruppe enthält, die an ein Siliziumatom gebunden ist, um eine kovalente Bindung mit den Oberflächen-OH-Gruppen einzugehen.

12. Verwendung nach einem der Ansprüche 1 bis 11, wobei das Siliziumdioxid oder Metalloxid eine durchschnittliche Partikelgröße im Bereich von 10 nm bis 100.000 nm, vorzugsweise mindestens 10 nm und höchstens 1000 nm, bevorzugter mindestens 10 nm und höchstens 100 nm aufweist, wobei die durchschnittliche Partikelgröße durch dynamische Lichtstreuung (DLS) gemessen wird.

13. Verwendung nach einem der Ansprüche 1 bis 12, wobei die (B)-Partikel, die Fluorkohlenstoffgruppen auf ihrer Oberfläche tragen, Metalloxidpartikel sind.

14. Verwendung nach Anspruch 13, wobei das Metalloxid TiO₂, Al₂O₃ oder Fe₃O₄ ist.

15. Verwendung nach einem der Ansprüche 1 bis 14, wobei die Menge an Fluorkohlenstoffgruppen, wie Fluoralkylgruppen, auf den Siliziumdioxidpartikeln oder Metalloxidpartikeln höchstens 5000 µmol/g beträgt, wobei die Menge an Fluorkohlenstoffgruppen durch Teilen der Anzahl von (Mikro)-Molen Silanisierungsreagenz durch das Trockengewicht von Siliziumdioxidpartikeln oder Metalloxidpartikeln vor der Derivatisierung berechnet wird.

16. Verwendung nach einem der Ansprüche 1 bis 15, wobei der Gewichtsprozentsatz als Trockengewicht von (B)-Partikeln aus Siliziumdioxid oder Metalloxid, die Fluorkohlenstoffgruppen auf ihrer Oberfläche tragen, bezogen auf die Summe des Gewichts von (B) und (A), dem Fluorkohlenstoffpolymer, die Beziehung 0,01 < B/(A+B) < 0,75 erfüllt.

## Revendications

1. Utilisation d'une composition comprenant :
(A) un polymère fluorocarboné ; et
(B) des particules de dioxyde de silicium ou d'un oxyde de métal portant des groupes fluorocarbonés sur leurs surfaces afin de réduire la friction entre des pièces automobiles en déplacement.

2. Utilisation selon la revendication 1 pour un revêtement de jupe de piston, un pédalier ou un palier de bielle dans un moteur automobile.

3. Utilisation selon la revendication 1 ou 2, dans laquelle le polymère fluorocarboné (A) est un ou plusieurs choisis dans le groupe consistant en : polytétrafluoroéthylène (PTFE), éthylène propylène fluoré (FEP), poly(fluorure de vinyle) (PVF) et polymère perfluoroalcoxy (PFA).

4. Utilisation selon l'une quelconque des revendications 1 à 3, dans laquelle les groupes fluorocarbonés sur la surface des particules de silice ou des particules d'oxyde de métal (B) contiennent des chaînes fluoroalkyle de formule CₓF₂ₓ₊₁.

5. Utilisation selon la revendication 4, dans laquelle x dans la formule CₓF₂ₓ₊₁ est d'au plus 6.

6. Utilisation selon la revendication 4 ou 5, dans laquelle les groupes fluorocarbonés sont des groupes C₃F₇.

7. Utilisation selon l'une quelconque des revendications 1 à 6, dans laquelle les groupes fluorocarbonés sur la surface des particules de silice ou d'oxyde de métal (B) contiennent des chaînes d'hydrocarbonées-fluorocarbonées mixtes de formule -(CH₂)_{y}(CF₂)ₓF.

8. Utilisation selon la revendication 7, dans laquelle x = 1.

9. Utilisation selon la revendication 7 ou 8, dans laquelle y est un nombre entier de 1 à 5.

10. Utilisation selon l'une quelconque des revendications 7 à 9, dans laquelle les surfaces des particules de silice ou d'oxyde de métal (B) portent des groupes Si-(CH₂)₂-CF₃.

11. Utilisation selon l'une quelconque des revendications 1 à 10, dans laquelle les particules de dioxyde de silicium ou d'oxyde de métal portant des groupes fluorocarbonés sur leurs surfaces (B) sont obtenues par un procédé de silanisation dans lequel des groupes OH de silanol sur la surface d'une nano(particule) de silice ou d'oxyde de métal de matière première sont dérivés en utilisant un silane hydrophobe contenant un groupe CₓF₂ₓ₊₁ hydrophobe lié à un atome de silicium apte à former une liaison covalente avec les groupes OH de surface.

12. Utilisation selon l'une quelconque des revendications 1 à 11, dans laquelle le dioxyde de silicium ou oxyde de métal présente une taille moyenne de particule dans l'intervalle de 10 nm à 100 000 nm, de préférence d'au moins 10 nm et d'au plus 1 000 nm, encore mieux d'au moins 10 nm et d'au plus 100 nm, dans laquelle la taille moyenne de particule est mesurée par dispersion de lumière dynamique (DLS).

13. Utilisation selon l'une quelconque des revendications 1 à 12, dans laquelle les particules (B) portant des groupes fluorocarbonés sur leurs surfaces sont des particules d'oxyde de métal.

14. Utilisation selon la revendication 13, dans laquelle l'oxyde de métal est TiO₂, Al₂O₃ et Fe₃O₄.

15. Utilisation selon l'une quelconque des revendications 1 à 14, dans laquelle la quantité de groupes fluorocarbonés, tels que des groupes fluoroalkyle, sur les particules de silice, ou particules d'oxyde de métal, est d'au plus 5 000 µm/g, dans laquelle la quantité de groupes fluorocarbonés est calculée en divisant le nombre de (micro)moles de réactif de silanisation par la masse sèche de particules de silice ou de particules d'oxyde de métal, avant la formation de dérivés.

16. Utilisation selon l'une quelconque des revendications 1 à 15, dans laquelle le pourcentage en masse, comme masse sèche, de (B) particules de dioxyde de silicium, ou d'oxyde de métal, portant des groupes fluorocarbonés sur leurs surfaces, par rapport à la somme de la masse de (B) et (A), le polymère fluorocarboné, satisfait la relation 0,01 < B/(A+B) < 0,75.
